(19) Europäisches Patentamt
European Patent Office
Office européen des brevets

(11) EP 2 390 683 B1

## (12) EUROPEAN PATENT SPECIFICATION

(45) Date of publication and mention
of the grant of the patent:
**08.04.2020 Bulletin 2020/15**

(51) Int Cl.:
***G01V 1/48*** (2006.01)

(21) Application number: **10425184.8**

(22) Date of filing: **28.05.2010**

(54) **Method and system for determining the rigidity of a geological layer**

Methode und System um die Rigidität einer geologischen Schicht zu ermitteln

Méthode et système pour déterminer la rigidité d'une couche géologique

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**30.11.2011 Bulletin 2011/48**

(73) Proprietor: **THUR S.R.L.**
**37122 Verona (IT)**

(72) Inventors:
• **Mulargia, Francesco**
**40121 Bologna (BO) (IT)**
• **Castellaro, Silvia**
**30174 Venezia (VE) (IT)**
• **Pastor, Mariapia**
**37021 Bosco Chiesanuova (VR) (IT)**

• **Vinco, Gianluca**
**37023 Grezzana (VR) (IT)**

(74) Representative: **Perani & Partners S.p.A.**
**Piazza Armando Diaz, 7**
**20123 Milano (IT)**

(56) References cited:
WO-A1-2008/154640 WO-A2-2004/019063
US-A- 6 094 401 US-A1- 2004 226 380

• **PARK CHOON B ET AL: "Multichannel analysis of surface waves", GEOPHYSICS, SOCIETY OF EXPLORATION GEOPHYSICISTS, US, vol. 64, no. 3, 1 May 1999 (1999-05-01), pages 800-808, XP002466095, ISSN: 0016-8033, DOI: DOI:10.1190/1.1444590**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention refers to a method and to a system for determining the rigidity of a geological layer underlying another geological layer, which is preferably a surface layer delimited at the upper part by a free surface. In particular, the invention refers to a method and system for determining the rigidity of a geological underlying a more rigid surface layer.

Patent application WO 2004/019063 relates to a method and a system for acquiring and utilizing the delay time recorded for different modes of seismic signals from a working drill bit source. The near surface layers and velocities are obtained by computer tomographic modeling of the shallow weathered, sub weathered layers. The drill bit is the source that generates elastic waves, detected on the ground surface using a plurality of sensors at various distances from the well location and in different azimuth directions. The reference signal is recorded by accelerometers mounted on a Kelly busing of the drill string. The sensors used are tri-axial or 3component receivers that detect the axial and torsional waves emanated from the drill bit vibration.

Patent US 6,094,401 describes a method of generating a downhole seismic source capable of generating a sweep of frequencies without significant interruption of the drilling process. The seismic source comprises a frequency-controllable modulator of an MWD (measurement while drilling) tool which is used to provide a large force to the drill bit which is in contact with the formation. In the patent, it is stated that, since the source is downhole, the resolution of the reverse VSP (vertical seismic profiling) processing is relatively good, and formations ahead of the bit may be imaged before being reached by the MWD tool.

Patent application WO 2008/154640 relates to a method for obtaining enhanced seismic data and optimized inverted reflectivities. The method includes the step of computing a plurality of statistical well characterizations based upon band-limited well reflectivities corresponding to a subsurface region of interest. A plurality of sets of processed seismic data are computed by applying a plurality of differing seismic processing sequences to at least a portion of a collection of seismic data corresponding to the subsurface region of interest. A plurality of sets of inverted reflectivities are also computed by inverting the plurality of sets of processed seismic data. A plurality of statistical seismic characterizations are computed based upon the plurality of sets of inverted reflectivities. A plurality of statistical difference measurements (SDMs) are computed between the well characterisations and the plurality of seismic characterisations. An optimal seismic processing sequence is selected based upon the computed SDMs. Enhanced seismic data is obtained by processing the seismic data corresponding to the subsurface region of interest utilizing the optimal seismic processing sequence. An optimal seismic inversion algorithm is then selected based upon the computed SDMs. Then the seismic data is inverted using the optimal seismic inversion algorithm to producing a set of optimized inverted reflectivities by inverting the enhanced seismic data using the optimal seismic inversion algorithm.

US 2004 0226380 A1 discloses an example of a method for measuring the stiffness of base and subgrade layers of soil.

The article of the Geophysics Society of Exploration Geophysicists, US vol.64 no. 3, 1 may 1999 "Multichannel analysis of surface waves" XP 002466095, discloses a method for measuring soil parameters by means of multichannel device. The measurement of the elastic properties, and in particular the rigidity, $\mu$, of the geological layers on which building foundations and generally building structures lie or into they are submerged, may have various applications, among which the evaluation of the stability of the ground and thus the risk of collapse or permanent deformation of a building structure in the long term and/or in the case of a seismic event.

The classification of foundation soils according to the NEHRP (USA), Eurocode 8 (Europe) and NTC2008 (Italy) standards for designing anti seismic building structures is mainly based on the velocity of the shear waves of a homogeneous layer equivalent to the first thirty metres of depth, $V_{s30}$. The velocities of the shear waves, $V_s$, is actually directly related to the rigidity of the material that forms the geological layer through the equation

$$\mu = \rho V_s^2, \qquad\qquad (1)$$

where $\rho$ is the density of the layer.

An application of the measurement of the velocity of the elastic waves in the subsoil is the evaluation of the efficiency of the interventions for consolidating the ground beneath existent foundations, aimed at improving the elastic parameters, such as the Young's modulus and the rigidity modulus.

Indirect techniques, based on surface measurements, i.e. neither inserting detector elements into the subsoil nor extracting samples from the subsoil and measuring properties thereof in a laboratory, are often used for measuring the velocity of the elastic waves. Typically, indirect techniques are of seismic type, i.e. they are based on the analysis of seismic waves produced by an artificial source.

Conventional approaches for measuring the velocity of the shear waves require a relatively high number of sensors, with ensuing increase of costs and the required spaces as well as practical difficulties in use in urban environments.

Furthermore, the use of the conventional method of seismic prospection and i.e. generating - by means of suitable apparatus - longitudinal P and transverse S body waves and recording refraction thereof by the geological layers, with the ensuing identification and measurement of the elastic properties of the latter, is inefficient. As a matter of fact, the law which governs refraction at an interface between two layers is the Snell's law

$$sin\ i\ /\ sin\ r = V1/V2 , \qquad\qquad (2)$$

according to which the ratio between the sine of the angle of incidence $i$ and the sine of the angle of refraction $r$ is equal to the ratio between the velocity in the first and in the second layer. If the source and the detector elements are positioned on the surface and the velocity of the underlying layer is greater, i.e. $V_1 < V_2$, upon reaching the critical angle of incidence according to which $sin\ r = 90°$, the refracted wave travels parallel to the interface between the two layers and may be re-refracted in the surface layer, thus allowing measuring the velocities and the thicknesses of both layers. However, as it typically occurs in case of sub-foundation layers, if $V_1 > V_2$, the body wave is not refracted parallel to the interface and shall not be re-refracted in the surface layer. Hence, it is impossible to measure, by detecting the refracted body waves, the velocity and the thickness of the underlying layer, which remains invisible and is referred to as a "ghost layer".

Methods for exploring the subsoil based on the study of the dispersion of elastic surface waves have been developed recently. These allow using a lower number of sensors maintaining the same accuracy and, generally, the exploration depth of the surface waves directly proportional to the wavelength. C.B. Park et al. in "Multi-channel analysis of surface waves (MASW)" published in Geophysics, vol. 64, p. 800-808. 1999, describe a multi-channel analysis of surface waves technique for determining the velocity profile of the shear waves.

In case of technical analysis of surface waves, the source is an apparatus which generates both P waves and S waves. The interaction between these two types of waves in proximity to a surface gives rise, at a given distance from the source, to surface waves. Energisation is typically actuated by means of a hammer which hits - once or several times - metal plates coupled to the surface of the ground to be explored. In this manner, wavefronts propagated through the underlying ground are generated.

Generally, the surface layer comprising the foundations of a building structure, indicated hereinafter also as foundation layer, typically has a rigidity greater than the rigidity of the underlying layer, which may be of different type (e.g. clay soil, sandy soil, etc).

The applicant observed that when investigating the elastic properties of a geological layer beneath the foundations, if the source is located on the surface of the ground to be explored, the energy developed by the source mostly remains trapped in the surface layer which serves as a waveguide for the elastic waves, due to the difference regarding the high seismic impedance between the two layers. Actually, through the interface between the surface layer and the underlying layer, only a fraction $k$ of the incident energy is transmitted, while the remaining energy $(1-k)$ is reflected. Calculating the value of the energy trapped in the layer and transmitted in terms of surface waves is generally complex and depends on the specific geometry of the problem. In first approximation, if the difference between the rigidity - and i.e. the products of density by velocity squared, according to relation (1) - of the two layers is large only a small amount of energy is transmitted into the underlying layer and is available to be explored. The waves transmitted in the underlying layer are then retransmitted into surface, but the energy thereof is reduced at the interface between the two layers by a further factor of the order of $k$. In conclusion, by generating at the surface the waves to explore the underlying layer, and recording them at the surface, the energy thereof is - in first approximation - reduced by a factor $k^2$. For example, a typical value of $k$ is 0.2, thus the waves that have explored the underlying layer return to the surface with energy in the order of 0.04 and identification thereof within the field of waves that are trapped for reflection in the first layer (whose energy is much higher, in the order of 0.8) is practically impossible. Hence, the identification of the surface waves associated to the deepest layer in the detected seismic traces and the measurement thereof are extremely difficult.

The Applicant has realised that if the active generator source of primary waves is positioned in the underlying layer whose rigidity is intended to be measured, the energy generated in the underlying layer is mostly available for characterizing the layer itself and is transmitted to the overlying layer solely after having "explored" the underlying one.

In particular, in case of energization in the underlying layer and in presence of an interface between two layers with different elastic properties with respect to each other (for example between two geological layers with different rigidity such as the foundation layer and the underlying layer), most of the energy is "trapped" in the underlying layer and it is represented by interface waves. These waves, called Stoneley waves, are entirely similar to Rayleigh surface waves and they propagate beneath the interface with the overlying layer with a simultaneously vertical and horizontal oscillation motion. Due to the continuity of movements at the interface, the Stoneley waves are also extended in the upper layer, exciting - by continuity - both the horizontal and vertical movements but exponentially attenuating when moving away from the interface itself. More specifically, the waves whose frequency coincides with that of the vibration modes of Rayleigh waves and Love waves in the overlying layer shall be least attenuated among the transmitted waves. The latter shall appear on the surface with more energy. In any case, given that only one fraction of energy is transmitted to the interface, to be detected on the surface, they should be generated with enough energy to be recorded.

The Applicant has understood that by positioning the source of seismic waves in the layer whose rigidity is intended to be measured it is possible to detect at the surface the Stoneley waves, that occur at the surface as Rayleigh and Love surface waves modes.

In an aspect, the present invention refers to a method for measuring the elastic waves of a geological layer according to claim 1.

In a further aspect, the present invention refers to a system suitable for measuring the elastic waves of a geological layer according to claim 8.

The present invention shall be described hereinafter more in detail with reference to the attached drawings, in which some but not all the embodiments are shown. The drawings illustrating the embodiments are schematic representations.

- figure 1 represents a planar view illustrating an exemplifying arrangement of an array of sensors apt to measure the elastic properties of the subsoil beneath and/or in proximity to a building, according to an embodiment of the invention.
- figure 2 represents a first transverse section of figure 1 along line AA.
- figure 3 represents a second transverse section of figure 1 along line BB. With the aim of improving clarity, the representation of the building 1 is omitted in the figure.
- figure 4 schematically shows the structure of a seismic rifle which can be used for the implementation of the method according to the present invention.
- figure 5 is an example of an image of the phase velocity of the surface waves (Love) as a function of the frequency in a situation prior to the intervention of consolidating the layer underlying the foundations.
- figure 6 is an example of an image of the phase velocity of the surface waves (Love) as a function of the frequency in a situation subsequent to the intervention of consolidating the layer underlying the foundations.

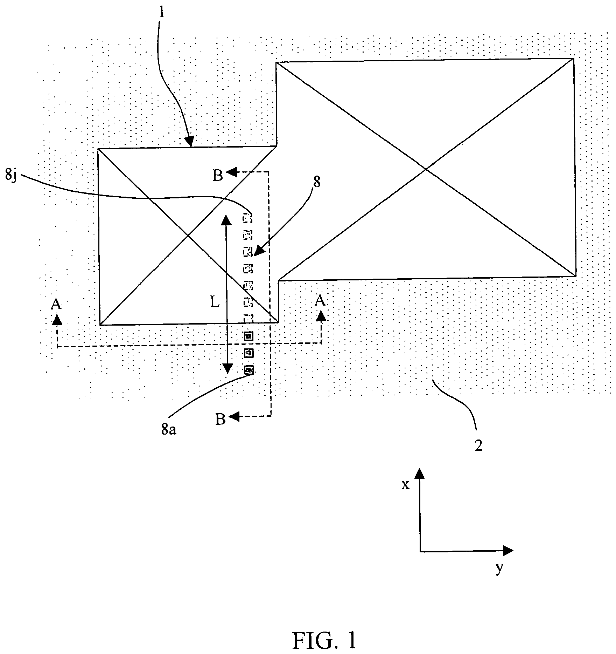

Referring to figures 1 to 3, in a preferred embodiment, the present invention refers to a method and to a system for measuring the rigidity of a geological layer positioned beneath the foundations of buildings and building structures in general, which constitute or are included in a surface layer delimited at the upper part by the free surface of the ground and indicated as foundation layer. The characterisation of the geological layers according to the method and system according to the present preferred embodiment may be performed both before a ground consolidation intervention and after the intervention with the aim of evaluating the intervention itself.

In the first approximation, it is possible to describe the subsoil as a stratified compound wherein the main variation of the composition and of the mechanical properties occurs along the depth, while the variation in the two horizontal directions is negligible. In this context and according to a non-limiting convention of the present invention, the layers are defined starting from the surface: the first layer shall be the surface one, the second shall be the underlying one and so on and so forth.

The method according to a particular aspect of the present invention is suitable for measuring the velocity of the elastic waves in a geological system comprising at least one first layer of the subsoil 6 and a second geological layer 5 underlying with respect thereto. The first layer is that whose upper surface is the free surface 2. The interface between the upper layer (first) 6 and the lower layer (second) 5 is indicated with reference number 3.

In the embodiment illustrated in figures 1-3, the first geological layer 6 is a foundation layer comprising the foundations of a building structure, for example a residential building 1.

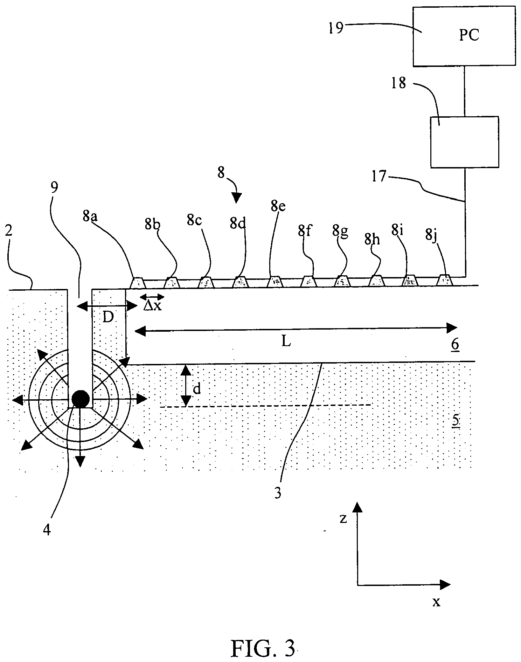

The system for measuring the elastic waves which are propagated in the geological system comprises a source 4 (shown in figure 3) apt to generate elastic body waves and an array of sensors 8 comprising a plurality of sensors 8a, 8b, ..,8j, each of which being apt to detect elastic surface waves which propagate along the free surface 2 of the ground. Preferably, the array of sensors is a linear array in which the sensors are arranged in line at a given spacing between a sensor and the next adjacent sensor (figure 3). In the example illustrated in figures 1-3 the array of sensors is constituted by ten sensors with constant spacing $\Delta x$.

However, the number of sensors comprised in the illustrated array shall not be deemed to be limitative of the present invention, such number being selected depending on the applications, for example as a function of the length of the area to be explored, as described further in detail hereinafter. In this context, a plurality of sensors is to be intended comprising at least two sensors, preferably between 4 and 12 sensors.

In a different embodiment, the spacing between the sensors may be of a different value from one sensor to another sensor or generally be non-constant.

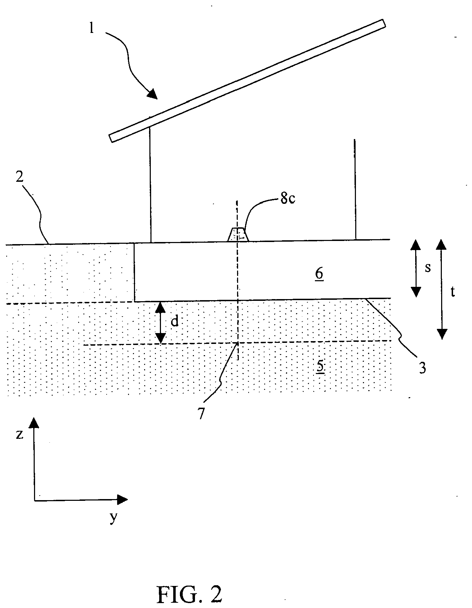

According to a main aspect of the preferred embodiments of the present invention, the method is suitable for measuring the surface waves caused by primary and secondary waves emitted by a source provided within a second geological layer underlying a first geological layer, the source being positioned at a predetermined depth greater than the thickness of the first layer, e.g. the foundation layer. Referring to figures 1-3 and called s the thickness of the first layer 6 (figure 2, along the z-axis), the source is arranged at a depth $t > s$. In a preferred embodiment, the distance d from the interface 3 between the first and the second geological layer, i.e. $d = t-s$, is comprised between 0.5 m and 1.5 m.

Preferably, the source is an impulse seismic source and comprises at least one explosive charge with initial velocity comprised between 300 and 700 m/s. In a preferred embodiment, the source comprises an explosive charge with an initial velocity of 500 m/s and insertion time < 1ms.

In some embodiments, the source 4 is positioned at a depth t, greater than the thickness s of the foundation layer, within a hole 9 (indicated in figure 3) which extends from the free surface through the geological system. In figure 2, the position of the source 4 along the z-axis (depth) is indicated with 7.

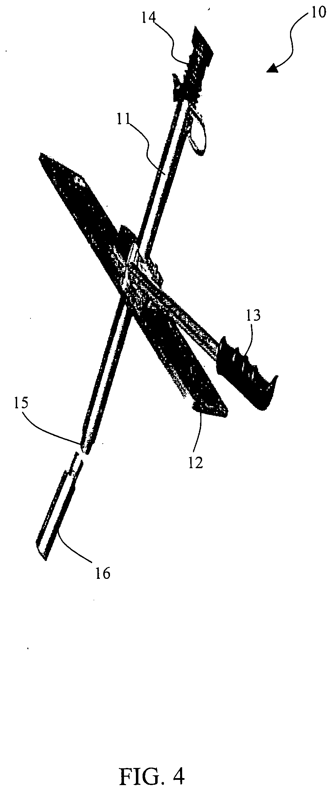

In a preferred embodiment, the energization of the source is provided by means of a depth seismic rifle, schematically illustrated in figure 4 and indicated in its entirety with reference number 10. The rifle comprises a barrel 11, of length suitable to reach the depth t, which is introduced into the ground, inside the lower geological layer, into a previously made hole (e.g. hole 9 in figure 3). For example, the length of the barrel 11 of the seismic rifle is at least 2 metres long, for example comprised between 2 and 3 metres, so as to be able to position and detonate the explosive charge, i.e. a cartridge, inside the underlying layer. The rifle comprises a plate 12 for laying on the ground surface, a support knob 13 and a trigger knob 14. The end 15 of the barrel 11 is engaged to a removable explosion chamber 16, with open bottom, into which the cartridge of the industrial type, per se known and available in the market, is inserted. The explosion of the cartridge may be performed by the free surface, by operating on the trigger knob 14 which mechanically hits an ignitor (not shown in the figure), generating the explosion of the cartridge, by means of a device (not shown in the figure) extending along the barrel 11.

Preferably, the sensors of the array of sensors 8 are geophones, i.e. elastic waves electromechanical transducers.

The signal of each geophone 8a, ...., 8j is recorded separately but synchronously on the different geophones. A relation between the wavelength and the thickness of the explored layer holds for the surface waves and for the layer waves. Generally, the components with large wavelength, $\lambda$, provide information regarding layers with greater depths, while components with small wavelength $\lambda$ provide information regarding layers closer to the surface. The relation:

$$V = \lambda \cdot f \qquad\qquad (3)$$

holds, where V is the velocity of the waves and f the frequency thereof. Considering the same velocity, the components with large wavelength $\lambda$ are the low frequency ones and those with small wavelength $\lambda$ are the high frequency ones.

Preferably, each sensor 8a, 8b, ..., 8j is a geophone with frequency comprised between 4 and 10 Hz. In an embodiment, the geophones 8a, .., 8j of the array 8 are horizontal oscillation geophones, suitable for detecting the velocity of the surface waves with transverse horizontal polarisation, i.e. Love waves. In a further embodiment the geophones are vertical oscillation geophones, suitable for detecting the velocity of the Rayleigh waves.

In the embodiment illustrated in the figures and with particular reference to figure 3, the measuring method comprises the generation of a shot "outside" the sensors line, i.e. the source is arranged at a predetermined distance D, defined along the direction of arrangement of the sensors (x-axis), from the nearest sensor, i.e. first sensor 8a, of the array. Preferably, with the aim of reducing or minimising the effects of the near field, D is not smaller than 5 m, more preferably it is comprised between 6 and 20 m.

Preferably , the array of sensors is linear along an aligning direction (axis x) and the source is arranged on the extension of the sensors alignment. However, in some embodiments of the present invention, the source is not arranged aligned with the array of sensors, but it is slightly displaced with respect to the aligning position in the plane (y,z), indicated with reference number 7 in figure 2.

In a further embodiment (not shown in the figures), the array of sensors is developed according to a two-dimensional geometry, such as for example according to an X, T or L-shaped arrangement. The minimum spacing between the sensors is in relation with the minimum detectable wavelength, thus with the detectable minimum depth. Preferably , the minimum spacing is comprised between 0.5 and 2 m.

In an embodiment, the sensors of the array of sensors are equally spaced from each other, with spacing $\Delta x$ between 0.5 and 2 m.

The distance between the first and the last sensor of the array, referred to as the detection length and indicated with L, represents the length of the detection cover of the system and it is in relation with the maximum wavelength, thus with the maximum detectable depth.

The step of recording the surface waves is carried out according to the multi-channel analysis of surface waves (MASW) technique. Therein, the recording of the surface waves generated by the seismic source by the plurality of receivers occurs simultaneously. The sensors are typically coupled to the soil by means of rods or on floors/foundations, by means of tripods. Referring to figure 3, the sensors 8a, 8b,...,8j, synchronised in acquisition, are connected, through a connection line 17, to a data acquisition line 18, preferably a digital multichannel seismograph with a number of channels at least equal to the number of sensors, which may be a commercial seismograph (e.g. Rosina produced by Micromed spa). The data acquisition unit may comprise or may in turn be connected with a central processing unit 19, for example a personal computer (PC). The acquisition of seismic traces occurs starting from the exceeding of a preset threshold ("trigger", coinciding with the instant of energization of the subsoil) and it lasts for a few seconds after said event. In an embodiment, the data acquisition unit saves the data regarding a brief period preceding the exceeding of the threshold ("pre-trigger"), said period lasting a few seconds or a few fractions of a second preceding the instant when the threshold is exceeded.

During the period of data acquisition by the data acquisition unit, the seismic traces are recorded by each sensor as a function of the time, thus obtaining a plurality of amplitude/time signals, each signal being detected by the respective sensor of the array of sensors.

Phase velocity spectra of the surface waves and the respective experimental dispersion curves are obtained through a transformation from the amplitude/time domain to the wave frequency/number domain (f-k) or slowness/frequency domain (p-f), or to the velocity/frequency domain (V-f), according to the processing methods known in the MASW field technique. Such technique is generally efficient at isolating the surface waves from the body waves (P and S), the first generally constituting the main portion of the seismic trace in presence of a sufficiently far energization. A dispersion curve is calculated by searching the maximum values of spectral power in the space f-k or p-f, so as to form a 2D image of the phase velocity of the Rayleigh and/or Love waves as a function of the frequency, which is in turn linked to the depth.

In particular and according to an embodiment, after recording the seismic traces, the step of determining the velocity of the surface waves comprises the following steps:

1) a test velocity value is hypothesised ($V_i$),
2) the traces are time translated to the different geophones by an amount ($\Delta t$) determined by the ratio between the distance of each geophone from the source and the hypothesized velocity $V_i$
3) the traces thus translated are summed, so as to calculate the function of correlation of all the traces,
4) a transformation of the correlated signal in the frequency domain is carried out. The spectral maxima shall indicate the frequency of the phases that have travelled at the velocity $V_i$.

Carrying out steps 1)-4) for different test velocities produces a data matrix which is represented in a frequency two-dimensional chart-$V_i$, generally represented coloured, where the colours are proportional to the power spectra under step 4). The higher the power spectral density at a given pair of velocity and frequency, the higher the energy of the waves.

The maximum values in the spectral charts indicate the velocity at the various frequencies of different propagation modes of surface waves, i.e. fundamental or higher-order modes, excited by the Stoneley waves, which thus occur as surface waves, both Rayleigh and Love surface waves.

In practice, what happens is that the Stoneley waves, travelling in the interface between the underlying layer and the overlying one, are coupled with the surface waves of the same frequency, providing energy thereto. It is these surface waves with "increased energy" that are recorded in surface and provide information on the Stoneley waves and thus on the underlying layer.

The variation of the velocity as a function of the frequency is called dispersion.

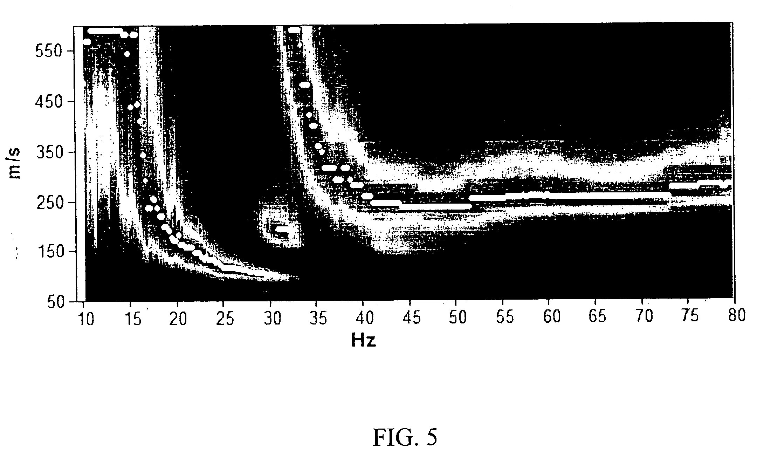

Figure 5 is an exemplifying image of experimental dispersion, in the phase frequency-velocity domain, obtained from the analysis of the seismic traces measured in a geological system of two layers, in which the upper layer is constituted by the foundations and has a thickness s of 1.3 m. The conditions of the experiment to which figure 5 refers were: an array of 10 horizontal component geophones with a vibrational frequency of 4.5 Hz arranged at a constant distance of 0.9 m from each other; an active source comprising a calibre 8 seismic rifle with exploding industrial cartridge which develops a pressure of about 1700 bars and an initial gas velocity of 500 m/s, in which the cartridge was exploded at a depth t of about 2 m and a distance D of 15 m from the first geophone of the array; the sampling of the signals was performed at a frequency of 1024 Hz.

In the image of figure 5, two distinct high energy regions are visible (in the grey scale, the greater energy corresponds to a lighter tonality), which are substantially attributable to two dominant modes of propagation of the surface waves, Love waves in this case: a first low frequency region extended from about 20 to 30 Hz (where there is a high density of maximum energy points, represented by white circles) and a second high frequency region which is extended approximately from 35 to 80 Hz. From the maximum energy points in each region there follows the identification of dispersion curves which indicate at what phase velocity the maximum transport of energy of the Love waves occurs as a function of the frequency and thus of the explored depth. In particular, the first region is attributable to a first mode of the Love waves with a phase velocity of about 150 m/s and the second region is attributable to a second Love mode with a phase velocity of about 300 m/s.

After the detection indicated in figure 5 an intervention for consolidating the layer underlying the surface foundation layer was carried out. The consolidation intervention may occur for example by providing a plurality of holes through the layer of the ground to be consolidated (i.e. the lower layer 5) and subsequently injecting an expanded resin for filling the holes, according to known techniques.

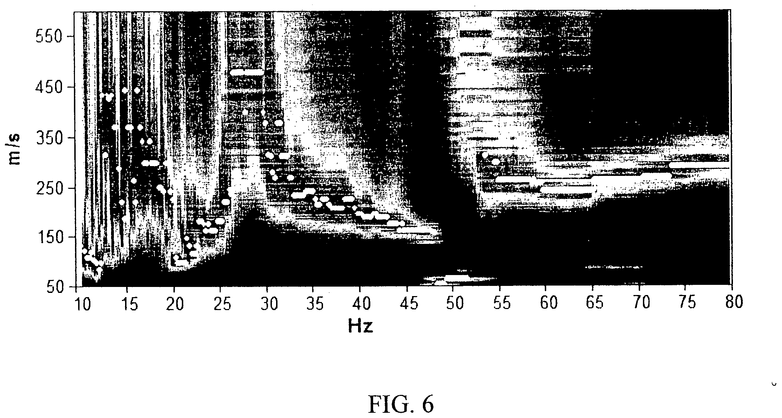

Figure 6 is the dispersion image obtained from recording the seismic traces after the consolidation intervention. Figure 6 shows the creation of a "channel" in which the waves not present in figure 5 travel, at a frequency between 30 and 45 Hz, i.e. an increase of rigidity in the layer in which the waves travel in this frequency range. As a matter of fact, it is observed that the maximum energy transfers both of the first and the second region are moved towards higher frequencies and velocities, with respect to the regions of maximum transfer of energy of figure 5. The points of maximum spectral power (white circles) for the first region extend now approximately from 30 to 45 Hz with phase velocity of about 200 m/s, while the points of maximum spectral power for the second region extend from about 55 to 100 Hz, with velocity of about 300 m/s. From a comparison of the image of figure 6 with an image of figure 5 it is concluded that the phase velocity for the first mode of the Love waves, associated with the deepest layer, is increased by about 30%. Both the velocity of the Rayleigh and Love surface waves is very near to that of the shear waves S, therefore the velocity value detected through the aforedescribed method represents, with good approximation, the value of the shear velocity Vs.

It is thus derived that the consolidation intervention has caused an increase of the shear velocity by about 30%.

The so-called inversion process allows obtaining a theoretical dispersion curve almost similar to the experimental dispersion curve, according to algorithms, per se known, for modelling of surface waves in multilayer systems. The calculation procedure thus allows obtaining, the profile of shear velocity, Vs, as a function of the depth, z. From the determination of the profile of shear velocity $V_s(z)$ the rigidity of the ground is obtained, and in particular the rigidity of layer underlying the foundations, $\mu$, given by the relation (1).

**Claims**

1. Method for determining the rigidity of a geological layer in terms of propagation velocity of the elastic waves within a geological system delimited by a free surface (2) and comprising at least one first geological layer (6) having a first rigidity and a second geological layer (5) having a second rigidity and being arranged below the first geological layer, said first and second layer being separated from each other by an interface (3), the method comprising the steps of:

   - positioning a source (4) within the second geological layer (5), whose rigidity is intended to be measured, the source being apt to generate seismic waves;
   - activating said source of seismic waves;
   - detecting at least one seismic signal by means of at least one sensor (8) arranged on the free surface, wherein detecting comprises detecting a plurality of seismic signals by means of an array of sensors (8) comprising a plurality of sensors (8a, ...,8j) arranged on the free surface (2), each sensor being apt to detect a seismic signal of the plurality of seismic signals and to detect elastic surface waves propagating along the free surface, wherein recording of surface waves is carried out according to a technique of multi-channel analysis of surface waves;
   - determining from at least one seismic signal a shear velocity of elastic waves in the second layer and thus indicative of the rigidity of the second layer, said step of determining a shear velocity of the elastic waves in the second layer comprises the following steps:
   - determining from at least one seismic signal propagation velocities of surface waves caused by the seismic waves generated by said source;
   - determining a map of said propagation velocities of the surface waves as a function of the frequency thereof;
   - identifying, in the velocities map, a propagation velocity whose frequency is correlated to a depth in the geological system, and
   - correlating at least one propagation velocity identified in the velocities map to a shear velocity of the elastic waves in the second layer (5) and thus indicative of the rigidity of the second layer,
   - calculating the rigidity from the shear velocity of the elastic surface waves in the second layer.

2. Method according to any one of the preceding claims, wherein the rigidity value of the first layer is greater than the rigidity value of the second layer.

3. Method according to any one of the preceding claims, wherein the first geological layer is delimited by the free surface and comprises the foundations of a building structure (1).

**4.** Method according to any one of the preceding claims, wherein the first layer has a thickness (s) and said source is positioned at a depth (t) with respect to the free surface larger than the thickness of the first layer.

**5.** Method according to any one of the preceding claims, wherein said source of seismic signal is an impulsive source suitable to generate body waves.

**6.** Method according to claim 6, wherein the impulsive source comprises at least one explosive charge with initial velocity comprised between 300 and 700 m/s.

**7.** Method according to any one of claims 1 to 6, wherein the step of detecting at least one seismic signal comprises detecting a signal as a function of the time during a period of acquisition and the step of determining a map of the propagation velocity of the surface waves comprises performing a transformation of the seismic signal from the time domain to the frequency domain.

**8.** System for determining the rigidity of a geological layer in terms of propagation velocity of the elastic waves within a geological system delimited by a free surface (2) and comprising at least one first geological layer (6) having a first rigidity and a second geological layer (5) having a second rigidity and being arranged below the first geological layer, said layers being separated from each other by an interface (3), the system comprising
a source apt to generate seismic waves, the source being positioned within the second geological layer, the rigidity value of the first layer being greater than the rigidity value of the second layer; an array of seismic signal sensors (8) comprising a plurality of sensors (8a, .., 8j), the plurality including a first (8a) and a last (8j) sensor, arranged on the free surface at a predetermined spacing from each other, said signal sensors (8) being apt to detect a seismic signal of the plurality of seismic signals and to detect elastic surface waves propagating along the free surface, wherein recording of surface waves is carried out according to a technique of multi-channel analysis of surface waves , and
an electronic unit (18) for acquiring seismic signals detected by the array of seismic signal sensors, said electronic unit (18) being configured to determine from at least one seismic signal a shear velocity of elastic waves in the second layer and thus indicative of the rigidity of the second layer by: determining from at least one seismic signal propagation velocities of surface waves caused by the seismic waves generated by said source, determining a map of said propagation velocities of the surface waves as a function of the frequency thereof, identifying, in the velocities map, a propagation velocity whose frequency is correlated to a depth in the geological system, and correlating at least one propagation velocity identified in the velocities map to a shear velocity of the elastic waves in the second layer (5) and thus indicative of the rigidity of the second layer, said electronic unit (18) being configured to calculate the rigidity from the shear velocity of the elastic surface waves in the second layer.

**9.** System according to claim 8, wherein the sensors are aligned along an alignment direction and the source is positioned at a predetermined distance (D) from the first sensor of the linear array of sensors, defined along the alignment direction.

**10.** System according to claim 8 or 9, wherein said source is positioned in the second layer at a depth (d) comprised between 0.1 m and 2.0 m from the interface con the first layer.

**11.** The system of claim 8, wherein the source is an impulsive source.

**12.** System according to any one of claims 8 to 11, wherein the source of seismic waves is energized by a depth seismic gun (10).

**13.** The system of claim 8, wherein the seismic signal sensors of the array are horizontal oscillation geophones, suitable for detecting the velocity of Love waves or vertical oscillation geophones suitable for detecting the velocity of Rayeigh surface waves.

**Patentansprüche**

**1.** Verfahren zum Bestimmen der Rigidität einer geologischen Schicht bezogen auf die Ausbreitungsgeschwindigkeit der elastischen Wellen innerhalb eines geologischen Systems, das von einer freien Oberfläche (2) begrenzt ist und mindestens eine erste geologische Schicht (6), die eine erste Rigidität aufweist, und eine zweite geologische Schicht (5) umfasst, die eine zweite Rigidität aufweist und unter der ersten geologischen Schicht angeordnet ist, wobei die erste und die zweite Schicht durch eine Grenzfläche (3) voneinander getrennt sind, wobei das Verfahren die folgenden Schritte umfasst:

- Positionieren einer Quelle (4) innerhalb der zweiten geologischen Schicht (5), deren Rigidität gemessen werden soll, wobei die Quelle geeignet ist, seismische Wellen zu erzeugen;
- Aktivieren der Quelle von seismischen Wellen;
- Detektieren von mindestens einem seismischen Signal mittels mindestens eines Sensors (8), der an der freien Oberfläche angeordnet ist, wobei das Detektieren das Detektieren einer Vielzahl von seismischen Signalen mittels einer Anordnung von Sensoren (8) umfasst, die eine Vielzahl von Sensoren (8a, ...,8j) umfasst, die an der freien Oberfläche (2) angeordnet sind, wobei jeder Sensor geeignet ist, ein seismisches Signal von der Vielzahl von seismischen Signalen zu detektieren und elastische Oberflächenwellen zu detektieren, die sich entlang der freien Oberfläche ausbreiten, wobei das Aufzeichnen von Oberflächenwellen gemäß einer Technik der Mehrkanalanalyse von Oberflächenwellen durchgeführt wird;
- von mindestens einem seismischen Signal, Bestimmen einer Schergeschwindigkeit von elastischen Wellen in der zweiten Schicht und somit Angeben der Rigidität der zweiten Schicht, wobei der Schritt zum Bestimmen einer Schergeschwindigkeit der elastischen Wellen in der zweiten Schicht die folgenden Schritte umfasst:
- von mindestens einem seismischen Signal, Bestimmen von Ausbreitungsgeschwindigkeiten von Oberflächenwellen, die von den von der Quelle erzeugten seismischen Wellen verursacht wurden;
- Bestimmen einer Karte der Ausbreitungsgeschwindigkeiten der Oberflächenwellen als eine Funktion von deren Frequenz;
- in der Geschwindigkeitenkarte, Identifizieren einer Ausbreitungsgeschwindigkeit, deren Frequenz mit einer Tiefe in dem geologischen System korreliert ist, und
- Korrelieren der in der Geschwindigkeitenkarte identifizierten mindestens einen Ausbreitungsgeschwindigkeit mit einer Schergeschwindigkeit der elastischen Wellen in der zweiten Schicht (5) und somit Angeben der Rigidität der zweiten Schicht,
- Berechnen der Rigidität von der Schergeschwindigkeit der elastischen Oberflächenwellen in der zweiten Schicht.

2. Verfahren nach einem der vorhergehenden Ansprüche, wobei der Rigiditätswert der ersten Schicht größer als der Rigiditätswert der zweiten Schicht ist.

3. Verfahren nach einem der vorhergehenden Ansprüche, wobei die erste geologische Schicht von der freien Oberfläche begrenzt ist und die Fundamente einer Gebäudestruktur (1) umfasst.

4. Verfahren nach einem der vorhergehenden Ansprüche, wobei die erste Schicht eine Dicke (s) aufweist und die Quelle in einer Tiefe (t) in Bezug auf die freie Oberflächenschicht positioniert ist, die größer als die Dicke der ersten Schicht ist.

5. Verfahren nach einem der vorhergehenden Ansprüche, wobei die Quelle des seismischen Signals eine Impulsquelle ist, die sich zum Erzeugen von Körperwellen eignet.

6. Verfahren nach Anspruch 6, wobei die Impulsquelle mindestens eine Sprengladung mit einer Anfangsgeschwindigkeit umfasst, die zwischen 300 und 700 m/s liegt.

7. Verfahren nach einem der Ansprüche 1 bis 6, wobei der Schritt des Detektierens von mindestens einem seismischen Signal das Detektieren eines Signals als eine Funktion der Zeit während eines Erfassungszeitraums umfasst und der Schritt des Bestimmens einer Karte der Ausbreitungsgeschwindigkeit der Oberflächenwellen das Durchführen einer Transformation des seismischen Signals vom Zeitbereich in den Frequenzbereich umfasst.

8. System zum Bestimmen der Rigidität einer geologischen Schicht bezogen auf die Ausbreitungsgeschwindigkeit der elastischen Wellen innerhalb eines geologischen Systems, das von einer freien Oberfläche (2) begrenzt ist und mindestens eine erste geologische Schicht (6), die eine erste Rigidität aufweist, und eine zweite geologische Schicht (5) umfasst, die eine zweite Rigidität aufweist und unter der ersten geologischen Schicht angeordnet ist, wobei die Schichten durch eine Grenzfläche (3) voneinander getrennt sind, wobei das System umfasst

eine Quelle, die geeignet ist, seismische Wellen zu erzeugen, wobei die Quelle innerhalb der zweiten geologischen Schicht positioniert ist, wobei der Rigiditätswert der ersten Schicht größer ist als der Rigiditätswert der zweiten Schicht;

eine Anordnung von seismischen Signalsensoren (8), die eine Vielzahl von Sensoren (8a, .., 8j) umfasst, wobei die Vielzahl einen ersten (8a) und einen letzten (8j) Sensor umfasst, die an der freien Oberfläche in einem vorbestimmten Abstand voneinander angeordnet sind, wobei die Signalsensoren (8) geeignet sind, ein seismisches Signal von der Vielzahl von seismischen Signalen zu detektieren und elastische Oberflächenwellen zu detektieren, die sich entlang der freien Oberfläche ausbreiten, wobei das Aufzeichnen von Oberflächenwellen gemäß einer Technik der Mehrkanalanalyse von Oberflächenwellen durchgeführt wird, und

eine elektronische Einheit (18) zum Erfassen von durch die Anordnung von seismischen Signalsensoren detektierten seismischen Signalen, wobei die elektronische Einheit (18) ausgestaltet ist, um von mindestens einem seismischen Signal eine Schergeschwindigkeit von elastischen Wellen in der zweiten Schicht zu bestimmen und somit die Rigidität der zweiten Schicht anzugeben durch: von mindestens einem seismischen Signal, Bestimmen von Ausbreitungsgeschwindigkeiten von Oberflächenwellen, die von den von der Quelle erzeugten seismischen Wellen verursacht wurden, Bestimmen einer Karte von den Ausbreitungsgeschwindigkeiten der Oberflächenwellen als eine Funktion von deren Frequenz, in der Geschwindigkeitenkarte, Identifizieren einer Ausbreitungsgeschwindigkeit, deren Frequenz mit einer Tiefe in dem geologischen System korreliert ist, und Korrelieren der in der Geschwindigkeitenkarte identifizierten mindestens einen Ausbreitungsgeschwindigkeit mit einer Schergeschwindigkeit der elastischen Wellen in der zweiten Schicht (5) und somit Angeben der Rigidität der zweiten Schicht, wobei die elektronische Einheit (18) ausgestaltet ist, um die Rigidität von der Schergeschwindigkeit der elastischen Oberflächenwellen in der zweiten Schicht zu berechnen.

9. System nach Anspruch 8, wobei die Sensoren entlang einer Ausrichtungsrichtung ausgerichtet sind und die Quelle in einem vorbestimmten Abstand (D) von dem ersten Sensor der linearen Anordnung von Sensoren positioniert ist, die entlang der Ausrichtungsrichtung definiert ist.

10. System nach Anspruch 8 oder 9, wobei die Quelle in der zweiten Schicht in einer Tiefe (d) positioniert ist, die zwischen 0,1 m und 2,0 m von der Grenzfläche der ersten Schicht liegt.

11. System nach Anspruch 8, wobei die Quelle eine Impulsquelle ist.

12. System nach einem der Ansprüche 8 bis 11, wobei die Quelle für seismische Wellen von einer seismischen Tiefenkanone (10) erregt wird.

13. System nach Anspruch 8, wobei die seismischen Signalsensoren der Anordnung Geophone mit horizontaler Oszillation, die sich zum Detektieren der Geschwindigkeit von Love-Wellen eignen, oder Geophone mit vertikaler Oszillation sind, die sich zum Detektieren der Geschwindigkeit von Rayleigh-Oberflächenwellen eignen.

**Revendications**

1. Procédé de détermination de la rigidité d'une couche géologique en termes de vitesse de propagation des ondes élastiques à l'intérieur d'un système géologique délimité par une surface libre (2) et comprenant au moins une première couche géologique (6) ayant une première rigidité et une seconde couche géologique (5) ayant une seconde rigidité et étant agencée au-dessous de la première couche géologique, lesdites première et seconde couches étant séparées l'une de l'autre par une interface (3), le procédé comprenant les étapes suivantes :

   - le positionnement d'une source (4) à l'intérieur de la seconde couche géologique (5), dont la rigidité est destinée à être mesurée, la source étant adaptée pour générer des ondes sismiques ;
   - l'activation de ladite source d'ondes sismiques ;
   - la détection d'au moins un signal sismique au moyen d'au moins un capteur (8) agencé sur la surface libre, dans lequel la détection comprend la détection d'une pluralité de signaux sismiques au moyen d'un réseau de capteurs (8) comprenant une pluralité de capteurs (8a, ...,8j) agencés sur la surface libre (2), chaque capteur étant adapté pour détecter un signal sismique de la pluralité de signaux sismiques et pour détecter des ondes élastiques de surface se propageant le long de surface libre, dans lequel l'enregistrement d'ondes de surface est exécuté selon une technique d'analyse multi-canal d'ondes de surface ;
   - la détermination, à partir d'au moins un signal sismique, d'une vitesse de cisaillement d'ondes élastiques dans la seconde couche et ainsi indicative de la rigidité de la seconde couche, ladite étape de détermination d'une vitesse de cisaillement des ondes élastiques dans la seconde couche comprend les étapes suivantes :
   - la détermination, à partir d'au moins un signal sismique, de vitesses de propagation d'ondes de surface provoquées par les ondes sismiques générées par ladite source ;
   - la détermination d'une carte desdites vitesses de propagation des ondes de surface en fonction de leur fréquence ;
- l'identification, dans la carte de vitesses, d'une vitesse de propagation dont la fréquence est corrélée à une profondeur dans le système géologique, et
- la mise en corrélation d'au moins une vitesse de propagation identifiée dans la carte de vitesses avec une vitesse de cisaillement des ondes élastiques dans la seconde couche (5) et ainsi indicative de la rigidité de la seconde couche,
- le calcul de la rigidité à partir de la vitesse de cisaillement des ondes élastiques de surface dans la seconde couche.

2. Procédé selon l'une quelconque des revendications précédentes, dans lequel la valeur de rigidité de la première couche est supérieure à la valeur de rigidité de la seconde couche.

3. Procédé selon l'une quelconque des revendications précédentes, dans lequel la première couche géologique est délimitée par la surface libre et comprend les fondations d'une structure de bâtiment (1).

4. Procédé selon l'une quelconque des revendications précédentes, dans lequel la première couche a une épaisseur (s) et ladite source est positionnée à une profondeur (t) par rapport à la surface libre plus grande que l'épaisseur de la première couche.

5. Procédé selon l'une quelconque des revendications précédentes, dans lequel ladite source de signal sismique est une source impulsive adaptée pour générer des ondes de volume.

6. Procédé selon la revendication 6, dans lequel la source impulsive comprend au moins une charge explosive avec une vitesse initiale comprise entre 300 et 700 m/s.

7. Procédé selon l'une quelconque des revendications 1 à 6, dans lequel l'étape de détection d'au moins un signal sismique comprend la détection d'un signal en fonction du temps durant une période d'acquisition et l'étape de détermination d'une carte de la vitesse de propagation des ondes de surface comprend l'exécution d'une transformation du signal sismique du domaine temporel au domaine fréquentiel.

8. Système de détermination de la rigidité d'une couche géologique en termes de vitesse de propagation des ondes élastiques à l'intérieur d'un système géologique délimité par une surface libre (2) et comprenant au moins une première couche géologique (6) ayant une première rigidité et une seconde couche géologique (5) ayant une seconde rigidité et étant agencée au-dessous de la première couche géologique, lesdites couches étant séparées l'une de l'autre par une interface (3), le système comprenant
une source adaptée pour générer des ondes sismiques, la source étant positionnée à l'intérieur de la seconde couche géologique, la valeur de rigidité de la première couche étant supérieure à la valeur de rigidité de la seconde couche ;
un réseau de capteurs de signal sismique (8) comprenant une pluralité de capteurs (8a, ..., 8j), la pluralité incluant un premier (8a) et un dernier (8j) capteur, agencés sur la surface libre avec un espacement prédéterminé l'un de l'autre, lesdits capteurs de signal (8) étant adaptés pour détecter un signal sismique de la pluralité de signaux sismiques et pour détecter des ondes élastiques de surface se propageant le long de la surface libre, dans lequel l'enregistrement d'ondes de surface est exécuté selon une technique d'analyse multi-canal d'ondes de surface, et une unité électronique (18) pour acquérir des signaux sismiques détectés par le réseau de capteurs de signal sismique, ladite unité électronique (18) étant configurée pour déterminer, à partir d'au moins un signal sismique, une vitesse de cisaillement d'ondes élastiques dans la seconde couche et ainsi indicative de la rigidité de la seconde couche par : la détermination, à partir d'au moins un signal sismique, de vitesses de propagation d'ondes de surface provoquées par les ondes sismiques générées par ladite source, la détermination d'une carte desdites vitesses de propagation des ondes de surface en fonction de leur fréquence, l'identification, dans la carte de vitesses, d'une vitesse de propagation dont la fréquence est corrélée à une profondeur dans le système géologique, et la mise en corrélation d'au moins une vitesse de propagation identifiée dans la carte de vitesses avec une vitesse de cisaillement des ondes élastiques dans la seconde couche (5) et ainsi indicative de la rigidité de la seconde couche, ladite unité électronique (18) étant configurée pour calculer la rigidité à partir de la vitesse de cisaillement des ondes élastiques de surface dans la seconde couche.

9. Système selon la revendication 8, dans lequel les capteurs sont alignés suivant une direction d'alignement et la source est positionnée à une distance prédéterminée (D) du premier capteur du réseau linéaire de capteurs, définie suivant la direction d'alignement.

**10.** Système selon la revendication 8 ou 9, dans lequel ladite source est positionnée dans la seconde couche à une profondeur (d) comprise entre 0,1 m et 2,0 m par rapport à l'interface avec la première couche.

**11.** Système selon la revendication 8, dans lequel la source est une source impulsive.

**12.** Système selon l'une quelconque des revendications 8 à 11, dans lequel la source d'ondes sismiques est alimentée par un canon sismique de profondeur (10).

**13.** Système selon la revendication 8, dans lequel les capteurs de signal sismique du réseau sont des géophones à oscillation horizontale adaptés pour détecter la vitesse d'ondes de Love ou des géophones à oscillation verticale adaptés pour détecter la vitesse d'ondes de surface de Rayeigh.

FIG. 1

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004019063 A
- US 6094401 A
- WO 2008154640 A
- US 20040226380 A1

### Non-patent literature cited in the description

- *Geophysics Society of Exploration Geophysicists,* 01 May 1999, vol. 64 (3
- **C.B. PARK et al.** Multi-channel analysis of surface waves (MASW). *Geophysics,* 1999, vol. 64, 800-808